# EUROPEAN PATENT APPLICATION

(11) **EP 1 389 864 A1**
(43) Date of publication of application: **18.02.2004**
(21) Application number: 03254987.5
(22) Date of filing: 12.08.2003
(51) Int. Cl.: H04M 3/22, H04M 7/00, H04L 29/06

(54) **Network architecture for supporting the lawful intercept of a network communication**

(30) Priority: 13.08.2002 US 403409 P; 13.08.2002 US 218450
(71) Applicant: Nortel Networks Limited, St. Laurent, Quebec H4S 2A9 (CA)
(72) Inventor: Ryan, Ronald D., Coppell, TX 75019 (US); Allan, David, Ottawa, Ontario K2B 5P9 (CA); Ewoti, Charles B., 88677 Markdork (DE); Bush, Terry W., Parker, TX 75002 (US); Goertzen, Christopher J., Ottawa, Ontario K1S 1R4 (CA); Pyke, Craik R., Nepean, Ontario K2H 8A6 (CA); Thompson, Roger L., 88709 Meersburg (DE)
(74) Representative: Mackenzie, Andrew Bryan

(57) **Abstract**

A network architecture for supporting the lawful intercept of a network communication is provided. The network architecture includes a delivery function that provides intercept information to one or more agencies. The delivery function receives an intercept request notification for intercept related information, receives intercept related information and content from one or more access functions, examines the content for additional intercept related information, and provides the received intercept related information and the additional intercept related information to at least one agency.

## Description

### RELATED APPLICATIONS

The invention claims the benefit of U.S. Ser. No. 60/ filed , which is hereby incorporated by reference (This provisional application has the same title and same filing date as the present application). In addition, the present invention is related to commonly assigned U.S. Ser. No. 09/757,904, which is also hereby incorporated by reference.

### TECHNICAL FIELD

The invention relates in general to telecommunications systems, and in particular to system and method for intercepting a communication session that occurs over a telecommunication system.

### BACKGROUND INFORMATION

Lawful interception of voice calls in a telecommunication provider's network is already a mandatory operating requirement in many countries. Often, a network operator who does not meet national lawful interception requirements is not allowed to offer service in these markets.

Lawful interception is the process by which a law enforcement agency is permitted to ask an operator to electronically 'wire tap' a subscriber's telecommunication traffic. Today, this capability exists on most public switching nodes, but is typically not yet found in data and/or packet-based networks.

Law Enforcement Agencies (LEAs) are allowed to partake in communication surveillance between a subject and a third party in an attempt to obtain further evidence of criminal activity. The evidence that the LEAs have historically been allowed to capture generally comprises intercept related information and call content of voice calls. Intercept related information (IRI), sometimes referred to as call identifying information, generally comprises the calling party number and the called party number. Court orders allowing access to the intercept related information generally comprise a Trap-and-Trace order and a Pen Register order, and generally require only a suspicion of wrongdoing. Trap-and-Trace orders allow LEAs access to intercept related information for incoming calls placed to a specified device identified by a phone number, and Pen Register orders allow LEAs access to intercept related information for outgoing calls originating from a specified device or phone number.

Call content generally comprises the content of the call, such as the voice transmissions. Call content orders, commonly known as Title III orders, generally require proof that the subject of the order is engaging in, or there is a high likelihood that the subject of the order is about to engage in, illegal activity. It is estimated that about 10% of the orders are Title III orders, the remaining 90% comprising Trap-and-Trace orders and Pen Register orders.

The technological advances in the area of telecommunications, such as data and packet-based networks, however, have provided additional methods and types of communication that render intercept related information less meaningful and difficult to obtain. As a result, the concept of a call, which typically refers to a voice call, is generally replaced with the concept of a communication session, which encompasses additional types of communications such as e-mail, Voice over Internet Protocol (VoIP), on-line banking, video, data of various types, and the like.

Communication sessions generally comprise communication associated information addresses and session identifiers, call redirection commands, e-mail addresses, and the like, generally designated intercept related information. Content comprises the information exchanged between the subject and the third party, such as voice transmissions, text messages, credit card numbers, bank accounts, and the like.

Difficulties often arise in a packet-switched network, such as the Internet. For one, a single communication session may be routed several times. For example, the subject may log onto a first server of an Internet Service Provider (ISP). From the ISP server, the subject may then access a second server that provides VoIP telephone sessions over the Internet. At the VoIP server, the subject may then provide a final destination for the communication session, such as an IP address or phone number for the destination. It can be easily seen that many more complex scenarios can occur.

Another difficulty is that the nodes in the packet-switched network must perform all of the intercept functionality. Many nodes do not have the processing capability (they are too busy or do not have required hardware/software) to perform all of the required functionality. Furthermore, often many nodes in the network must be involved at providing the intercept, which exacerbates the processing requirement of the network.

### SUMMARY

The previously mentioned difficulties are addressed and an advancement is provided by a new and improved function and method for supporting the lawful intercept of a communication session in a telecommunications network. In one embodiment, a delivery function provides intercept information to one or more agencies by receiving an intercept request notification for intercept related information, receiving intercept related information and content from one or more access functions, examining the content for additional intercept related information, and providing the received intercept related information and the additional intercept related information to at least one agency.

In some embodiments, the content includes one or more data packets and the step of examining the content includes stripping a header from the one or more data packets.

In some embodiments, the content includes one or more data packets and the step of examining the content includes examining a data block from the one or more data packets to identify the additional intercept related information.

In some embodiments, the delivery function also receives an intercept request notification for content and provides the received intercept related information and the content to another one of the agencies.

In some embodiments, the intercept related information and the content are received from different access functions.

In another embodiment, a new and unique method provides lawful intercept of a communication session occurring in a packet network. The method includes receiving content from the communication session at a delivery function, stripping a first portion of information from the content, and providing the stripped information to a designated law enforcement agency.

In some embodiments, the method also includes notifying the delivery function of a bi-casted communication session and designating the law enforcement agency. Also, the method sends a request to a first access function to bi-cast the communication session to a destination and to the delivery function.

In some embodiments, the method also includes sending a request to a second access function to bi-cast the communication session to the destination and to the delivery function.

In some embodiments, the method also includes sending a request to a second access function to provide a second portion of information to the delivery function and providing the second portion of information to the designated law enforcement agency.

In some embodiments, the method includes receiving an intercept request from the designated law enforcement agency and identifying the first access function from the intercept request.

In some embodiments, the step of identifying includes determining a jurisdiction from the intercept request and selecting the first access function according to the jurisdiction.

In another embodiment, a new and unique method provides a lawful intercept of a data communication session in a telecommunication network. The method includes receiving an intercept request notification for intercept related information, notifying a delivery function to receive a bi-cast of the communication session, notifying at least one access function to bi-cast the communication session to the delivery function, informing the delivery function to strip intercept related information from the received bi-cast of the communication session, and informing the delivery function to provide the stripped intercept related information to a first predetermined law enforcement agency.

In some embodiments, the method also includes informing the delivery function to provide content from the bi-cast of the communication session to a second predetermined law enforcement agency. The intercept related information and the content may come from the same access function.

Additional embodiments are provided in the following description and the attached drawings.

### BRIEF DESCRIPTION OF THE DRAWINGS

Fig. 1 is a diagram of a telecommunications system that can benefit from one embodiment of the present invention.

Fig. 2 is a functional diagram of the telecommunication system of Fig. 1

Fig. 3 is a flowchart for implementing one embodiment of the present invention.

### DETAILED DESCRIPTION OF THE INVENTION

The present invention provides a unique network architecture for supporting the lawful intercept of a network communication. It is understood, however, that the following disclosure provides many different embodiments, or examples, for implementing different features of the invention. Specific examples of components, signals, messages, protocols, and arrangements are described below to simplify the present disclosure. These are, of course, merely examples and are not intended to limit the invention from that described in the claims. Well-known elements are presented without detailed description in order not to obscure the present invention in unnecessary detail. For the most part, details unnecessary to obtain a complete understanding of the present invention have been omitted inasmuch as such details are within the skills of persons of ordinary skill in the relevant art.

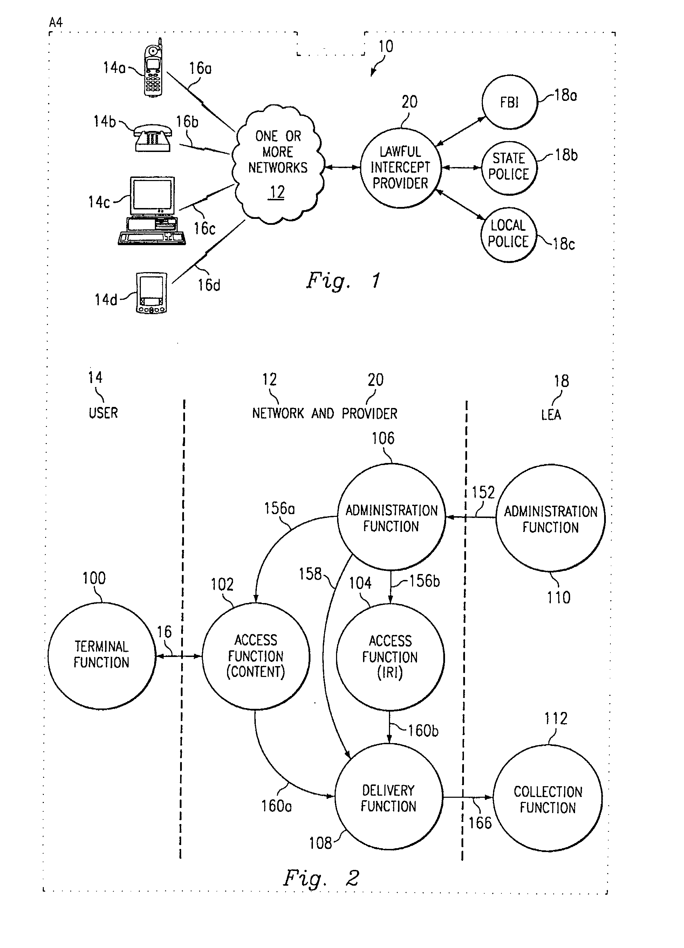

Referring now to Fig. 1, the reference numeral 10 designates, in general, a telecommunications system that can benefit from one embodiment of the present invention. In this embodiment, there is one or more networks 12 that may include the Internet, a wireless telephone network, an Intelligent Network (IN), a local area network, a personal network, and so forth. In addition, the networks 12 may include one or more circuit switched networks. It will be understood that the present invention works equally well on many different network infrastructures.

Also in the example of Fig. 1, four different terminal devices are connected to the network 12. For the sake of example, the terminal devices include a Code Division Multiple Access (CDMA) wireless telephone 14a connected to the network 12 through a wireless link 16a, a telephone 14b connected to the network 12 through a digital subscriber line (DSL) link 16b, a computer 14c connected to the network 12 through a coaxial cable 16c, and a personal digital assistant (PDA) 14d connected to the network 12 through a wireless General Packet Radio Service (GPRS) link 16d. It is understood that the various links 16a, 16b, 16c, 16d will have appropriate connection nodes in the network 12, discussed in greater detail below.

For various reasons, a law enforcement agency (LEA) such as one or more federal agencies 18a, one or more state police agencies 18b, or one or more local police agencies 18c may seek to intercept communications to and/or from any of the terminal devices 14a-14d. To initiate such an intercept, the LEA provides a request to a network operator 20, commonly referred to as the "intercept provider." The intercept provider 20 then communicates with the network 12 so that the requested information is provided to the appropriate law enforcement agency(s).

There may be many different types of intercept requests. However, for the sake of example and clarity, the present embodiment generally identifies all requests as either content requests or intercept related information (IRI) requests. It is understood that various other types of requests, including combinations of content and IRI or subsets of either or both, can also be accommodated by the present invention.

Referring now to Fig. 2, the system 10 of Fig. 1 is re-illustrated as a functional diagram. The terminal devices 14a-14d are collectively shown as a user domain 14 and the LEAs 18a-18c are collectively shown as a LEA domain 18. Between the user domain 14 and the LEA domain 18 is the network domain 12 and the intercept provider 20, also referred to as the delivery domain. The delivery domain 20 includes equipment associated with the operator which is responsible for interconnection with the LEA domain 18 and delivery of intercepted information from the network domain 12 to the LEA domain.

A function identifies a task to be performed. The task may actually be distributed across several different hardware nodes and other computing systems in any of the domains 12, 14, 18, and 20. Also, the functions may be performed entirely by computer software, and may exist as different software routines on a single node. In the present embodiment, a terminal function 100 is performed primarily in the user domain 14. Access functions 102, 104 are performed primarily in the network domain 12. Administration function 106 and delivery function 108 are performed primarily in the delivery domain 20. Administration function 110 and collection function 112 are performed primarily in the LEA domain 18.

In the present embodiments, the access functions 102, 104 represent the locations where a communication stream and associated IRI can be intercepted. Examples of hardware nodes on which the access functions may reside depend on the link 16, such as: a Serving or Gateway GPRS Support Node (SGSN or GGSN) for a Time Division Multiplex (TDM) type link, a Packet Data Serving Node (PDSN) for a CDMA or CDMA 2000 type link, and a Cable Modem Termination System (CMTS) for a cable link.

In some embodiments, there may be many delivery functions, with some dedicated to receive IRI, some dedicated to receive content, and some doing both. In these embodiments, each access function may be able to deliver to multiple delivery functions, and each delivery function may be able to receive each delivery function may be able to provide intercepted communications to multiple LEAs 18. Furthermore, in some embodiments, a delivery function may provide one type of intercept information (e.g., content) to one LEA, and another type of information (IRI) to another LEA. All of these embodiments are generally represented by the delivery function 108 illustrated in Fig. 2.

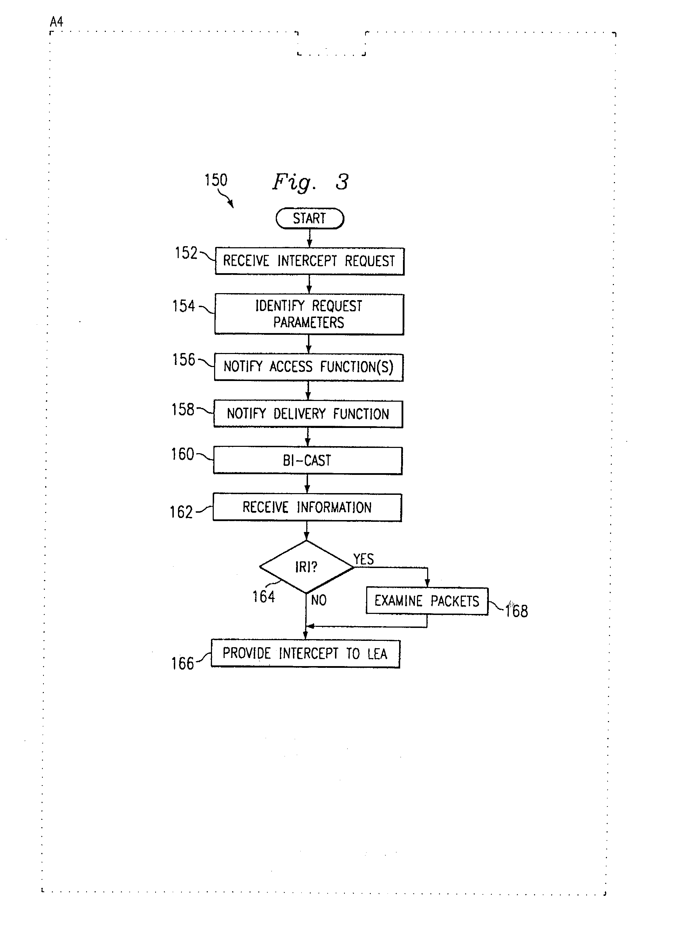

Referring also to Fig. 3, a method 150 can be used to implement one embodiment of the present invention. The method begins at step 152 where an intercept request is received. In the diagram of Fig. 2, the intercept request is illustrated by the arrow 152 originating from the administration function 110 of the LEA 18. The intercept request 152 can be derived from a legal warrant, and may include information such as who the subject is, what type of information to collect (content or IRI), and jurisdictional requirements for the intercept (e.g., a warrant may have a limited area of authority, such as a single county or state).

As shown in Fig. 2, the intercept request 152 is received at the administration function 106. Although it is anticipated that the intercept request 152 can be in electronic form, and according to a predetermined format, it is also anticipated that the request could be manually provided on paper. For example, a copy of a warrant with a judge's signature can be provided. In this example, a user can manually provide the intercept request 152 to the administration function 106. The administration function 106 performs provisioning and centralized storage functionality which receives and stores court orders and distributes the appropriate interception information through the network domain 12 and the delivery domain 20.

At step 154, the administration function 106 analyzes the intercept request 152 to set up the intercept to be performed. The administration function will identify one or more access functions based upon the subject, the jurisdiction, and the type of information to be intercepted. In one embodiment, that maps the various potential access functions with parameters such as jurisdiction, subject, and information type. The table may also indicate which access functions are able to receive a special message format from the administration function 106. One example of a table that maps access functions to jurisdictions is provided below in Table 1. It is understood, however, that many more parameters and access functions can be included, and Table 1 is only provided for the sake of example.

**Table 1**

| Access Function | County | State |
|---|---|---|
| SGSN #1234 | Harris | Texas |
| GGSN #2345 | Travis | Texas |
| PDSN #3456 | Dallas | Texas |
| CMTS #4567 | Tulsa | Oklahoma |

At step 156, the administration function 106 notifies the identified access functions. As shown in Fig. 2, the administration function 106 sends a message 156a to access function 102 to intercept content from the terminal function 100. The administration function 106 also sends a message 156b to access function 104 to intercept IRI from the terminal function 100.

In some embodiments, the messages 156a, 156b are formatted as INI-1 type messages. INI-1 refers to an interface between the access function (which may include a control point for performing this interface) and the administration function. The INI-1 interface is used to send "ahead-of-time" court order notifications to the access functions. These notifications indicate the subject to be intercepted and the delivery function(s) to deliver the intercepted content and IRI. In some embodiments, the INI-1 interface can be standardized so that many different access functions from many different venders can accept the messages 156a, 156b.

At step 158, the administration function 106 also notifies the delivery function 108. As shown in Fig. 2, the administration function 106 sends a message 158 to delivery function 108 to expect information from one or more access functions. In addition, the message 158 also instructs the delivery function to route the information to the collection function 112, discussed in greater detail below, with respect to step 166. In some embodiments where the administration function 106 and the delivery function 108 are on the same piece of hardware, the message 158 can be in the form of an update to a shared memory resource or a software record passed between the two functions.

At step 160, when requested to intercept a communication session, the access functions 102 and/or 104 "bi-cast" the information stream associated with the session. That is, the communication session is allowed to continue to its destination, as it would normally do without the intercept request, and a copy of the communication session is also made available for receipt by the LEA 18.

Upon determination that the subject is involved in a communication, the access functions 102, 104 are notified "just-in-time" about the communication to intercept and which delivery function (delivery function 108 in the present example) to bi-cast the intercepted information to. As "events" occur on the communication stream (e.g. offhook, digits dialed, feature activity, communication session establishment, communication establishment, packet(s) sent/received), the events are intercepted at the access functions 102, 104 and encoded and passed to the delivery function 108.

The access functions 102 and 104 provide the content and IRI to the delivery function 108 through interfaces 160a and 160b, respectively. In some embodiments, the access function 104 has an interface to the delivery function 108 called INI-2. This interface is used to send the intercepted IRI to the delivery function 108. The connection between these two devices may be a non-dedicated connection in that information from multiple, simultaneously active interceptions may be sent over the single connection to the particular delivery function 108.

Similarly, the access function 102 has an interface to the delivery function 108 called INI-3. This interface is used to send the intercepted content to the delivery function 108. The connection between these two devices may either be dedicated per intercepted communication, such as for voice content, or shared, such as for data content where it is useful to minimize the amount of resources associated with reliable transport of the content. In some embodiments, the INI-2 and INI-3 interfaces can be standardized so that many different access functions from many different venders can provide the messages 160a, 160b.

At step 162, the delivery function 108 receives the content and IRI from the access functions 102 and 104. The delivery function 108 has been configured with ahead-of-time messaging from the administration function 106 concerning court order activity. When a court order is activated or modified, messaging is sent to the delivery function indicating subject identification information and specific LEA destinations (collection function 112) for the content and/or IRI.

At step 164, a determination is made at the delivery function 108 whether the intercept request was for content or IRI. If content is requested, then execution proceeds to step 166 where the bi-casted content and IRI is provided to the collection function 112 of the LEA 18. As shown in Fig. 2, the delivery function 108 sends a message 166 to the collection function 112. In some embodiments, the message 166 may actually be separated into several different messages, such as one for content and another for IRI. Also, in those embodiments were multiple delivery functions are utilized, the message 166 may also be provided from several different sources.

The delivery function takes in each content and IRI stream and replicates it to each LEA destination per the court order specification (indicated in message 158). In other words, although there may be two court orders against a given Target, one court order may have been from a court order for IRI only and the other for IRI and content. It is the responsibility of the delivery function to ensure only the "court order stipulated" information is delivered to each LEA.

The delivery function performs buffering of content and/or information as required per the specific intercept requirements when the replicate streams can not be successfully delivered to the LEA(s). The delivery function manages the interfaces and the individual connections to the LEA(s).

If at step 164 the determination is that only IRI is requested, execution proceeds to step 168. The delivery function 108 receives both content and IRI. It may be desirable to extract additional IRI from the content for delivery to the LEA 18. For example, content is often provided in the form of data packets, with each packet having a header and a data block. The header will include source and destination information, which may be provided to the LEA 18 in response to an IRI intercept request. The data block (the bulk of the data being delivered by the packet) may also have some IRI as well. The delivery function 108 may include additional processing ability to locate and extract the additional IRI from the data block as well.

Continuing with the example discussed earlier, if the subject first connects to a first server associated with an Internet Service Provider, then a second associated with a VoIP website, and then to the final destination, the header of all the data packets may only include information about the subject and the first server. However, the data block may include information about the second server and/or the final destination - all of which is considered IRI. Therefore, the data block of the packet is examined and the IRI is retrieved there from. Execution then proceeds to step 166 where the requested information is provided to the LEA 18. In other embodiments, different delivery functions associated with different network operators may be used to provide the IRI from the second server and/or destination.

Although only a few exemplary embodiments of this invention have been described in detail above, those skilled in the art will readily appreciate that many modifications are possible in the exemplary embodiments. Accordingly, all such modifications are intended to be included in the scope of this invention as defined in the following claims.

## Claims

1. In a telecommunications system, a delivery function for providing intercept information to one or more agencies, the delivery function comprising instructions for:
receiving an intercept request notification for intercept related information;
receiving intercept related information and content from one or more access functions;
examining the content for additional intercept related information;
providing the received intercept related information and the additional intercept related information to at least one agency.

2. The function of claim 1 wherein the content includes one or more data packets and the step of examining the content includes stripping a header from the one or more data packets.

3. The function of claim 1 wherein the content includes one or more data packets and the step of examining the content includes examining a data block from the one or more data packets to identify the additional intercept related information.

4. The function of claim 1 further comprising:
receiving an intercept request notification for content;
providing the received intercept related information and the content to another one of the agencies.

5. The function of claim 1 wherein the intercept related information and the content are received from different access functions.

6. The function of claim 1 wherein the instructions are distributed among different computing systems.

7. The function of claim 1 wherein the telecommunications system includes a packet data network.

8. The function of claim 1 wherein the agency is a law enforcement agency.

9. A method for providing lawful intercept of a communication session occurring in a packet network, the method comprising:
receiving content from the communication session at a delivery function;
stripping, at the delivery function, a first portion of information from the content; and
providing the stripped information to a designated law enforcement agency.

10. The method of claim 9 further comprising:
notifying the delivery function of a bi-casted communication session and designating the law enforcement agency; and
sending a request to a first access function to bi-cast the communication session to a destination and to the delivery function.

11. The method of claim 9 further comprising:
sending a request to a second access function to bi-cast the communication session to the destination and to the delivery function.

12. The method of claim 9 further comprising:
sending a request to a second access function to provide a second portion of information to the delivery function; and
providing the second portion of information to the designated law enforcement agency.

13. The method of claim 10 further comprising:
receiving an intercept request from the designated law enforcement agency; and
identifying the first access function from the intercept request.

14. The method of claim 13 wherein the step of identifying includes:
determining a jurisdiction from the intercept request; and
selecting the first access function according to the jurisdiction.

15. The method of claim 9 wherein the communication session includes access through a cable link and the first access function resides on a Cable Modem Termination System (CMTS).

16. The method of claim 9 wherein the communication session includes access through a Time Division Multiplexed (TDM) link and the first access function resides on a Gateway General Packet Radio Service Support Node (GGSN).

17. The method of claim 9 wherein the communication session includes access through a Code Division Multiple Access link (CDMA, CDMA2000)and the first access function resides on a Packet Data Serving Node (PDSN).

18. A method for providing a lawful intercept of a data communication session in a telecommunication network, the method comprising:
receiving an intercept request notification for intercept related information;
notifying a delivery function to receive a bi-cast of the communication session;
notifying at least one access function to bi-cast the communication session to the delivery function;
informing the delivery function to strip intercept related information from the received bi-cast of the communication session;
informing the delivery function to provide the stripped intercept related information to a first predetermined law enforcement agency.

19. The method of claim 18 further comprising:
informing the delivery function to provide content from the bi-cast of the communication session to a second predetermined law enforcement agency.

20. The method of claim 19 wherein the intercept related information and the content come from the same access function.
